# EUROPEAN PATENT APPLICATION

(11) **EP 1 142 733 A2**
(43) Date of publication of application: **10.10.2001**
(21) Application number: 01303210.7
(22) Date of filing: 05.04.2001
(51) Int. Cl.: B60G 17/015, B60G 17/02, B60G 11/32

(54) **Vehicle wheel suspension**

(30) Priority: 07.04.2000 GB 0008568
(71) Applicant: Harvey Bailey Engineering Limited, Ashbourne, Derbyshire DE6 2GA (GB)
(72) Inventor: Harvey-Bailey, Rhoderick McIntyre, Alstonefield, Ashbourne, Derby. DE6 2GA (GB); Greenwood, Steven Michael, West Yorkshire BD 20 6QR (GB)
(74) Representative: Swindell & Pearson

(57) **Abstract**

A vehicle 10 has wheels 12, each associated with a stub axle 14, the outermost end of which will rise and fall relative to the car 10. A mechanical or gas spring 16 provides resilience to resist this movement. In some vehicles, the resilience of the spring 16 is adjustable, and set automatically by a control system in order to accommodate differences in driving conditions, techniques or the like. An algorithm used to control the resilience will assume an expected weight of the car 10. If the weight of the car changes significantly, such as by the addition of protection in the form of armour plating, armoured glass or the like, the same algorithm will no longer be appropriate for setting the spring 16. Thus, additional springs 20 and/or torsion bars 22 are used to provide preloading to the suspension arrangement so that the spring 16 is then required only to support the unmodified weight of the car 10, allowing existing control arrangements and algorithms to be used without modification.

## Description

The present invention relates to vehicle wheel suspension arrangements.

Motor vehicles conventionally have ground engaging wheels mounted on the vehicle by means of a resilient suspension arrangement, many variations of which have been proposed. Typically, a rigid member, such as a wishbone, will be pivotally attached to the vehicle chassis at one end of the member, carrying the wheel at the other end. A spring, which may be a mechanical spring, pneumatic spring or other resilient member is attached to act between the rigid member and the vehicle chassis or body, thereby providing resilience in the mounting of the wheel on the vehicle. The characteristics of the suspension arrangement can be further modified in other ways, such as by the installation of a shock absorber unit.

Traditional arrangements which use mechanical springs have fixed characteristics chosen as part of the design process of the vehicle. More recently, it has been proposed to use adjustable springs, such as air filled springs, the internal pressure of which can be varied to change the spring characteristics. The springs may be adjusted either by manual intervention by the driver, or automatically by a control system which monitors driving conditions, driving techniques or the like.

A vehicle which is modified from the original design, in such a way as to produce a significant increase in vehicle weight, such as by the installation of armour plating within the body panels of the vehicle, will have a greater weight than the weight for which the suspension was originally designed and the suspension will thus not behave in the manner intended by the designer, particularly if the suspension is an automatic system.

The present invention provides a vehicle comprising a plurality of ground engaging wheels, each mounted on the vehicle by means of a resilient suspension arrangement strong enough to provide adequate support for the vehicle during use, the vehicle being modified and thereby having a substantially increased weight, and the vehicle being provided as part of the modification with a second resilient arrangement connected between the vehicle body and the wheel to provide increased resilient resistance in the suspension arrangement, for bearing the increased weight.

The second resilient arrangement may comprise a linear resilient device such as a mechanical or gas spring or the like, or may comprise a torsion member. The torsion member may be an elongate member acting in torsion between a moveable component of the resilient suspension arrangement, and a fixed position relative to the vehicle body, such as a chassis member. There may be an intermediate member connected between the torsion member and the moveable member of the suspension arrangement, whereby to cause movement of the moveable member to change to torsion applied to the torsion member.

The second resilient arrangement preferably acts between the vehicle and a rigid member on which the wheel is mounted, such as a wishbone arrangement.

The resilient suspension arrangement may comprise a first resilient member having adjustable resilience. The resilience may be adjustable while the vehicle is in motion. The suspension arrangement may further comprise control means operable to provide automatic adjustment of the first resilient member.

The invention also provides a vehicle wheel suspension arrangement comprising a first resilient member operable to provide resilience in the mounting of a ground engaging wheel on the vehicle, and a second resilient arrangement which, in use, provides additional resilience in the mounting, the wheel being moveable relative to the remainder of the vehicle against the combined resilience of the first and second resilient members.

The second resilient arrangement may comprise a linear resilient device such as a mechanical or gas spring or the like, or may comprise a torsion member. The torsion member may be an elongate member acting in torsion between a moveable component of the resilient suspension arrangement, and a fixed position relative to the vehicle body, such as a chassis member. There may be an intermediate member connected between the torsion member and the moveable member of the suspension arrangement, whereby to cause movement of the moveable member to change to torsion applied to the torsion member.

The second resilient arrangement preferably acts between the vehicle and a rigid member on which the wheel is mounted, such as a wishbone arrangement.

The resilient suspension arrangement may comprise a first resilient member having adjustable resilience. The resilience may be adjustable while the vehicle is in motion. The suspension arrangement may further comprise control means operable to provide automatic adjustment of the first resilient member.

Embodiments of the present invention will now be described in more detail, by way of example only, and with reference to the accompanying drawings, in which:
Fig. 1 is a highly schematic perspective view of a vehicle which incorporates a suspension arrangement according to the present invention; and
Fig. 2 is a highly schematic perspective view of the suspension arrangement for a single wheel of the vehicle of Fig. 1, illustrating two alternative embodiments of the invention.

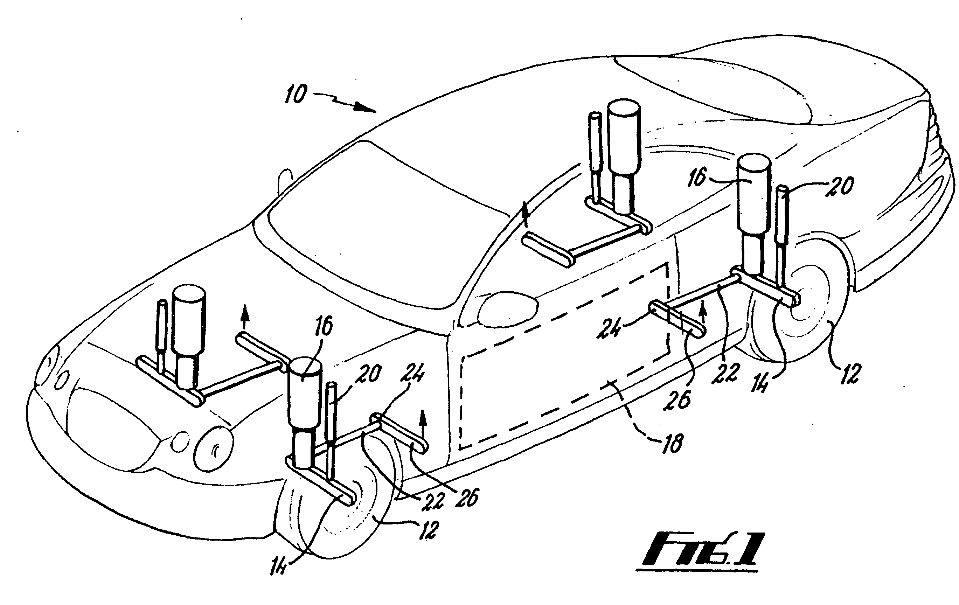

Turning to Fig. 1, there is shown a vehicle which in this example is in the form of a car. The body of the car is indicated in ghosted lines. The car has four ground engaging wheels 12 of which two are visible in Fig. 1. Each wheel 12 is associated with a stub axle 14 (which may alternatively be a wishbone arrangement) extending generally transversely of the car 10 and carrying the wheel 12 at the outermost end of the axle 14. The outermost end of the stub axle 14 will rise and fall, relative to the remainder of the car 10, as the wheel 12 rises or falls, for instance to accommodate unevenness in the surface beneath the car 10. In order to control this motion, to provide desired ride characteristics for the car 10, a resilient arrangement 16, such as a mechanical or gas spring is provided, acting between the stub axle 14 and a fixed location on the car 10, so that any tendency for the wheel 12 to rise relative to the car 10 must overcome the resistance provided by the spring 16, while the spring 16 will provide a restoring force tending to move the wheel 12 back down when the cause of the movement has been removed.

To the extent so far described, the car 10 is conventional. However, the car 10 has been modified in a manner which increases the weight of the car body. For instance, the car may have had armour plating and armoured glass added, for the protection of the VIP occupants. For instance, a sheet of armour plate material 18 may be incorporated within a vehicle panel, as illustrated by broken lines in Fig. 1, as part of this modification. The nature of armour plate material and protective glass is such that the modification will substantially increase the weight of the car 10, perhaps adding as much as 1.5 tonnes to the weight of a 2 tonne car. Consequently, the weight supported by the suspension arrangements will be significantly different to the weight assumed by the designer of those arrangements. In particular, this presents a difficulty in the event that the springs 16 are adjustable, such as air or gas filled springs whose pressure is automatically adjusted by a control system in order to accommodate differences in driving conditions, driving techniques or the like. An algorithm on which this control is based will implicitly or explicitly incorporate reference to the expected weight of the car 10 and will thus become inappropriate once that weight has significantly changed. The remaining features illustrated in the drawings are incorporated by virtue of the invention, in order to accommodate these changes.

First, the springs 16 are not the only components which provide resilient resistance against movement of the stub axle 14. Additional springs 20 are installed, acting between the stub axles 14 and fixed locations on the vehicle 10, in parallel with the springs 16. Furthermore, the inboard end of the stub axle 14 is not pivotally connected in conventional manner to a fixed point on the vehicle chassis, but is carried on one end of a torsion bar 22. The torsion bar 22 runs in a longitudinal direction away from the stub axle 14, to a position 24 fixed on a chassis member 26. The torsion bar 22 may be splined to engage complimentary splines within a socket in the chassis member 26, or may be alternatively connected to prevent the fixed end of the torsion bar 22 turning relative to the chassis member 26. In similar manner, the other end of the torsion bar 22 is fixed to the stub axle 14, such as by means of interengaging splines so that at that end, the torsion bar 22 provides a pivot mounting for the inboard end of the axle 14, and that end of the torsion bar 22 must turn as the wheel 12 moves up and down. In consequence, the bar 22 will be under torsion, the amount of torsion experienced by the bar 22 being increased as the wheel 12 moves up relative to the car 10, and being decreased as the wheel moves down relative to the car 10. Thus, the torsion bar 22 provides a resilient bias, by means of the torsion, acting to press the wheel 12 downwardly relative to the car 10 and thus assisting the spring 16 in determining the overall characteristics of the suspension arrangement.

The additional spring 20 and the torsion bar 22 may each be used without the other, or may both be used together. In the event that the torsion bar 22 is not used, the inboard end of the stub axle 14 would be pivotally connected with a fixed chassis member, in conventional manner.

The introduction of additional resilient components 20, 22 into the suspension arrangement will modify the response of the suspension. The precise manner in which the response is modified, and the nature of the modified response, may be a complicated matter to determine precisely. The response will depend on the spring strength of the spring 20, the torsion strength of the bar 22, and the relative positions of the various components, the length of the stub axle 14, size of the wheel and the like. Nevertheless, the additional components can be thought of as simply providing a pre-loading of the suspension arrangement in order to support all or much of the additional weight given to the car 10 during the modification. Thus, the spring 16 is then required only to support the unmodified weight of the car 10, which is the task for which the spring 16 was designed. Accordingly, the design performance of the arrangement can be recovered and in particular, if the spring 16 is an automatically adjusted arrangement, the conditions under which it is operating will be restored to those for which is was designed, or substantially so, thus allowing the algorithm to be used to control the spring 16 in the manner which will be appropriate.

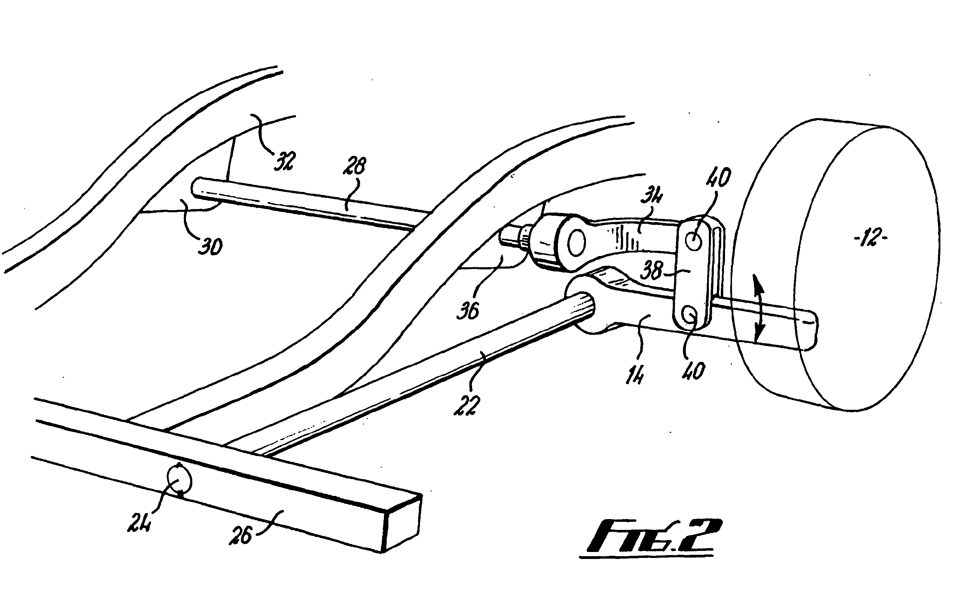

Fig. 2 also shows a further torsion bar 28, which would preferably be used instead of the torsion bar 22, but could be used in addition to the bar 22. The torsion bar 28 extends transversely of the car 10, i.e. generally parallel with the rotation axis of the wheel 12. The end of the bar 28 remote from the wheel 12 is fixed at a position 30 against rotation relative to the chassis, such as by splined engagement with a chassis member 32 in the manner described above in relation to the chassis member 26 and bar 22. The other end of the bar 28 carries a lever 34 splined to the bar 28. The free end of the bar 28 may also be supported by a clearance fit through another chassis member 36, allowing free rotation relative to the member 36.

The lever 34 extends away from the bar 28 to a position above the stub axle 14, where the lever 34 bends to occupy a position generally above and parallel with the axle 14. A link member 38 is attached to the lever 34 and axle 14 by pivot pins 40. In consequence, vertical movement of the stub axle 14 is applied to the end of the lever 34 by the link 38, causing the torsion bar 28 to be twisted, by the lever 34 acting in the manner of a crank. Consequently, the torsion experienced by the bar 28 is caused to change as the wheel 12 moves up and down. The torsion bar 28 is therefore again providing a pre-loading to the stub axle 14, in the manner which has been described.

It will be apparent to the skilled man that many variations and modifications can be made to the apparatus described above, without departing from the scope of the present invention. In particular, alternative arrangements for resilient pre-loading of the suspension arrangements could be devised. Several pre-loading components could be used together, or separately, and the strength and characteristics of those components can be selected in order to set the final characteristics of the modified suspension. It is envisaged that the suspension arrangement associated with each ground engaging wheel would be modified in like manner, but it may be appropriate in some circumstances to modify each suspension arrangement in a different manner, such as if the modification to the vehicle results in an uneven weight distribution around the vehicle.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A vehicle comprising a plurality of ground engaging wheels, each mounted on the vehicle by means of a resilient suspension arrangement strong enough to provide adequate support for the vehicle during use, the vehicle being modified and thereby having a substantially increased weight, and the vehicle being provided as part of the modification with a second resilient arrangement connected between the vehicle body and the wheel to provide increased resilient resistance in the suspension arrangement, for bearing the increased weight.

2. A vehicle according to claim 1, wherein the second resilient arrangement comprises a linear resilient device.

3. A vehicle according to claim 2, wherein the linear resilient device is a mechanical or gas spring.

4. A vehicle according to claim 2, wherein the linear resilient device comprises a torsion member.

5. A vehicle according to claim 4, wherein the torsion member is an elongate member acting in torsion between a moveable component of the resilient suspension arrangement, and a fixed position relative to the vehicle body.

6. A vehicle according to claim 5, wherein the fixed position is provided on a chassis member.

7. A vehicle according to any of claims 4 to 6, wherein an intermediate member is connected between the torsion member and the moveable member of the suspension arrangement, whereby to cause movement of the moveable member to change to torsion applied to the torsion member.

8. A vehicle according to any preceding claim, wherein the second resilient arrangement acts between the vehicle and a rigid member on which the wheel is mounted.

9. A vehicle according to claim 8, wherein the rigid member is a wishbone arrangement.

10. A vehicle according to any preceding claim, wherein the resilient suspension arrangement comprises a first resilient member having adjustable resilience.

11. A vehicle according to claim 10, wherein the resilience of the first resilient member is adjustable while the vehicle is in motion.

12. A vehicle according to claim 10 or 11, wherein the suspension arrangement further comprises control means operable to provide automatic adjustment of the first resilient member.

13. A vehicle wheel suspension arrangement comprising a first resilient member operable to provide resilience in the mounting of a ground engaging wheel on the vehicle, and a second resilient arrangement which, in use, provides additional resilience in the mounting, the wheel being moveable relative to the remainder of the vehicle against the combined resilience of the first and second resilient members.

14. An arrangement according to claim 13, wherein the second resilient arrangement comprises a linear resilient device.

15. An arrangement according to claim 14, wherein the resilient device is a mechanical or gas spring.

16. An arrangement according to claim 14, wherein the resilient device comprises a torsion member.

17. An arrangement according to claim 16, wherein the torsion member is an elongate member acting in torsion between a moveable component of the resilient suspension arrangement, and a fixed position relative to the vehicle body.

18. An arrangement according to claim 17, wherein the fixed position is on a chassis member.

19. An arrangement according to any of claims 16 to 18, comprising an intermediate member connected between the torsion member and the moveable member of the suspension arrangement, whereby to cause movement of the moveable member to change to torsion applied to the torsion member.

20. An arrangement according to any of claims 13 to 19, wherein the second resilient arrangement acts between the vehicle and a rigid member on which the wheel is mounted.

21. An arrangement according to claim 20, wherein the rigid member is a wishbone arrangement.

22. An arrangement according to any of claims 13 to 21, wherein the resilient suspension arrangement comprises a first resilient member having adjustable resilience.

23. An arrangement according to claim 22, wherein the resilience is adjustable while the vehicle is in motion.

24. An arrangement according to claim 22 or 23, wherein the suspension arrangement further comprises control means operable to provide automatic adjustment of the first resilient member.
